# EUROPEAN PATENT APPLICATION

(11) **EP 0 612 072 A1**
(43) Date of publication of application: **24.08.1994**
(21) Application number: 93115528.7
(22) Date of filing: 25.09.1993
(51) Int. Cl.: G11B 23/087

(54) **Pad for magnetic tape cassette**

(30) Priority: 17.02.1993 JP 27721/93
(71) Applicant: MATSUSHITA ELECTRIC INDUSTRIAL CO., LTD., Kadoma-shi, Osaka-fu, 571 (JP)
(72) Inventor: Watanabe, Masaru, Nishinomiya-shi, Hyogo-ken (JP)
(74) Representative: Eisenführ, Speiser & Partner

(57) **Abstract**

A pad for use in a magnetic tape cassette, which includes a base material (2), a large number of fluorocarbon fibers (1) filled on the base material, and a metallic plate spring (4) on which the base material is fixed at its side not filled with the fluorocarbon fibers (1). The fluorocarbon fibers are improved in the fiber falling off suppressing effect when they are subjected to easy adhering treatment such as plasma discharge treatment or corona discharge treatment. The base material (2) should preferably be of a double layer structure of a film-like sheet and an elastic member, and most preferably, should have a polyester group film as the film-like sheet.

## Description

### BACKGROUND OF THE INVENTION

### 1. Field of the Invention

The present invention generally relates to a magnetic tape cassette, and more particularly, to a pad employed in a magnetic tape cassette to be used, for example, for audio appliances.

Conventionally, the pad used for an audio magnetic tape cassette has been prepared by forming animal fibers, for example, of a rabbit, sheep or the like into a felt material, which is mounted on a metallic plate spring. Meanwhile, there has also been conventionally proposed, for example, in Japanese Patent Laid-Open Publication Tokkaisho No. 64-57469 (i.e., Tokkaihei No. 01-57469), a pad formed by filling or setting synthetic fibers on a supporting layer which is then mounted on a metallic plate spring. In an embodiment of the above prior art, polyamide, and synthetic fibers of acrylic or polyester and cellulose group are described as materials therefor.

Recently, some magnetic tapes used as a digital audio cassette (referred to as DCC hereinafter) or the like, are provided with a back coat layer mainly composed of carbon, etc. at the side opposite to the magnetic face of the magnetic tape in order to reduce adhesion of foreign matters to the magnetic tape by lowering electrical resistance thereof for decreasing writing or reading errors of digital signals.

However, when a coefficient of dynamic friction against the back coat layer in the above magnetic tape was measured with respect to the pad prepared by the felt material of the animal fibers of a rabbit, sheep or the like mounted on the metallic plate spring as described above, it was found high at 0.35. In the case where the above pad was attached to a tape cassette, which was then loaded on a tape cassette recorder for recording and reproducing, the magnetic tape caused a "stick slip" with respect to the pad to produce an abnormal noise so-called "tape squeaking", thus giving rise to a serious problem on the characteristics of the product.

On the other hand, in the pad as disclosed in Tokkaisho No. 64-57469 referred to above, since the synthetic fibers superior in slidability such as nylon, etc. are employed as compared with the animal fibers used in the known pad, although the dynamic frictional coefficient with respect to the back coat layer of the magnetic tape is comparatively low at 0.29, the serious problem of "tape squeaking" still occurred when the pad was mounted on a tape cassette and then, the tape cassette was loaded in the tape cassette recorder for recording and reproducing.

Such problem related to "tape squeaking" as referred to above is largely affected by the sliding resistance between the back coat layer of the magnetic tape and the pad sliding thereover.

As a result of an investigation made by the present inventor into a pad employing fluorocarbon fibers extremely low in the frictional resistance instead of the animal fibers of a rabbit, sheep or the like as conventionally used, the dynamic frictional coefficient thereof was found to be very low at 0.15, and when this pad was loaded on a tape cassette for recording and reproducing on a tape cassette recorder, it was completely free from the problem of "tape squeaking". However, in this case, there was another serious problem that, since the fluorocarbon fibers are smooth on the surface thereof with a low frictional resistance as compared with the animal fibers of a rabbit, sheep or the like, in spite of the felt-like form, the fluorocarbon fibers are disengaged from the felt material to fall off therefrom, and the fiber chips tend to adhere to the magnetic tape, thus resulting in such a defect that signals can not be properly recorded on the magnetic tape, or the recorded signal can not be correctly read out therefrom.

### 2. Description of the Prior Art

### SUMMARY OF THE INVENTION

Accordingly, an essential object of the present invention is to provide a pad for a magnetic tape cassette which is low in a dynamic frictional coefficient with respect to a back coat layer of a magnetic tape so as not to produce a defect such as "tape squeaking", without a possibility that the fibers fall off from the pad.

Another object of the present invention is to provide a pad of the above described type, which is simple in construction and stable in functioning at high reliability, and can be readily manufactured at low cost.

In accomplishing these and other objects, according to one preferred embodiment of the present invention, there is provided a pad for use in a magnetic tape cassette, which includes a base material, a large number of fluorocarbon fibers filled on said base material, and a metallic plate spring on which said base material is fixed at its side not filled with the fluorocarbon fibers.

The fluorocarbon fibers are characterized in that they have been treated for easy adhesion, and more specifically, subjected to plasma discharge treatment or corona discharge treatment. Lengths of the fluorocarbon fibers are in the range from 0.2mm to 1.0mm. A density for filling the fluorocarbon fibers with respect to the base material is set to be in the range from 80 fibers/mm² to 500 fibers/mm², in which range, touch of the magnetic head with respect to the magnetic tape may be stably maintained. Moreover, the base material is of a synthetic rubber or expanded urethane, or polyester group film, or a film made of polyimide or aramid, or polyethylene naphthalate or polyphenylene sulfide or polyamide-imide. Meanwhile, the base material may be of a double layer construction in which the fluorocarbon fibers are filled on the base material of said film, with an elastic member attached to the side of the film not filled with the fluorocarbon fibers. Thickness of the film is in the range from 30µm to 200µm. If the film is thinner than the thickness of this range, wrinkle tends to be formed when the fluorocarbon fibers are filled, and uniform filling can not be effected. On the contrary, if the film is thicker than the thickness of this range, rigidity becomes too high, and function as a pad tends to be lost, since touch of the magnetic head with respect to the tape is not uniform. The fluorocarbon fibers are of a copolymer of polytetrafluoroethylene or tetrafluoroethylene and perfluoroalkylvinylether.

It is to be noted here that the term "filling of fibers" in the present application means a method in which an adhesive agent is preliminarily applied over the base material, and the fibers electrically charged are caused to collide with the base material for being fixed thereon, or the fibers are subjected to vibration so as to physically collide with the base material for being secured thereon.

According to the arrangement of the present invention as described above, since the fluorocarbon fibers are filled on the base material, there is no possibility that the fluorocarbon fibers fall off from the base material as compared with the conventional pad made of the felt material of fluorocarbon fibers. By applying easy adhesion treatment such as the plasma discharge treatment or corona discharge treatment, etc. to the fluorocarbon fibers, the effect for suppressing falling off of the fluorocarbon fibers from the base material may be improved. Moreover, since such treatment as above does not deteriorate dynamic frictional coefficient of the fluorocarbon fibers with respect to the back coat layer of the magnetic tape, generation of "tape squeaking" upon travelling of the magnetic tape during recording and reproduction is advantageously eliminated. By setting the lengths of the fluorocarbon fibers in the range from 0.2mm to 1.0mm, favorable function as a pad can be displayed when the magnetic head of a tape recorder is pressed against the pad of the present invention. More specifically, when the length of the fluorocarbon fibers is longer than 1.0mm, buckling strength per one fiber is lowered so that the fiber is bent or folded due to depressing force of the magnetic head, and thus, the function as the pad is undesirably lost, while in the case where the length of the fibers is shorter than 0.2mm, the buckling strength becomes too large, thereby damaging the back face of the magnetic tape.

The material for the base material to be filled with the fluorocarbon fibers may be of a polyester group film. Besides, when a heat resistance is required, a film made of polyimide, aramid, or polyethylene naphthalate or polyphenylene sulfide or polyamide-imide may be used for the material. By using the film smooth on the surface as referred to above, the adhesive agent may be uniformly provided on the film, and the fluorocarbon fibers are fixedly secured by the adhesive agent upon filling of the fibers, and therefore, falling off of the fluorocarbon fibers from the pad can be advantageously suppressed. Furthermore, when the elastic member is provided at the side of said film opposite to its side filled with the fibers, proper elasticity necessary for the pad can be achieved.

In the magnetic tape cassette pad having the construction as described above, since the dynamic frictional coefficient with respect to the back coat layer of the magnetic tape is extremely low, the undesirable "tape squeaking" does not take place during recording and reproducing. Moreover, since the falling off of the fluorocarbon fibers from the pad can be suppressed, reading or writing errors of signals during the recording and reproducing can be reduced to a large extent.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 is a perspective view of a magnetic tape cassette pad according to one preferred embodiment of the present invention,
Fig. 2 is a cross section taken along the line II-II in Fig. 1,
Fig. 3 is a perspective view of a magnetic tape cassette pad according to another embodiment of the present invention,
Fig. 4 is a cross section taken along the line IV-IV in Fig. 3,
Fig. 5 is a graphical diagram showing examples of frequency analysis measurements of signals recorded/reproduced by using the magnetic tape cassette pad according to one preferred embodiment of the present invention and the conventional pad, and
Fig. 6 is a top plan view of a magnetic tape cassette in which a pad according to the present invention is employed.

### DETAILED DESCRIPTION OF THE INVENTION

Before the description of the present invention proceeds, it is to be noted that like part are designated by like reference numerals throughout the accompanying drawings.

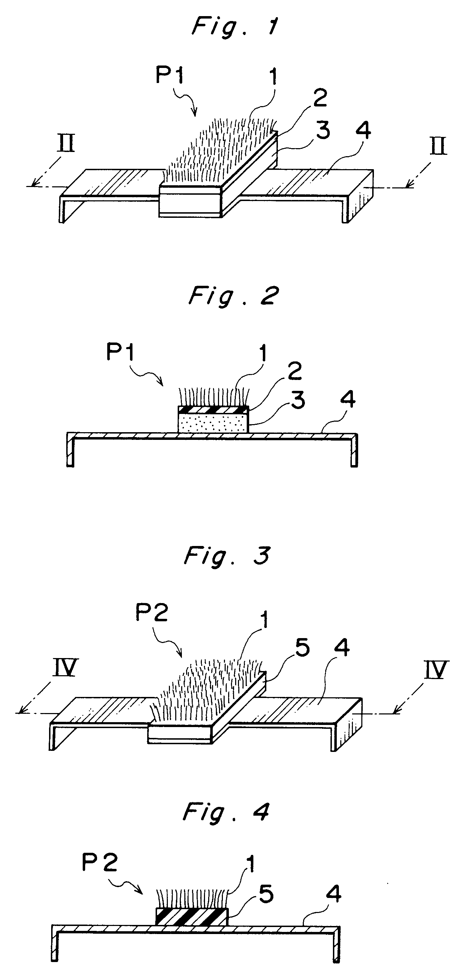

Referring now to the drawings, there is shown in Figs. 1 and 2, a pad for a magnetic tape cassette according to one preferred embodiment of the present embodiment which includes a film 2 as a base material, a plurality of or a large number of fluorocarbon fibers 1 filled on one face of the film 2, an elastic member 3 fixed to the other face of the film 2 not filled with the fibers 1 by an adhesive agent or the like, and a metallic plate spring 4 attached to the side of the elastic member 3 not fixed to the film 2 also by an adhesive agent, etc.

According to the present invention, the base material on which the fluorocarbon fibers 1 are filled should preferably be of the film-like sheet 2 smooth on its surface. When the surface is smooth, the adhesive agent for fixing the fluorocarbon fibers 1 on the base material may be formed on the sheet 2 in a uniform thickness, thus making it possible to suppress falling off of the fluorocarbon fibers 1 from the base material. The thickness of the film 2 should be in the range-from 30µm to 200µm. If the thickness is smaller than the range, wrinkle tends to be formed during filling of the fluorocarbon fibers, thus hindering uniform filling of the fibers. Meanwhile, if the thickness is larger than this range, rigidity is excessively increased, and the proper function as a pad is lost, since the magnetic head does not touch the magnetic tape uniformly.

For the film-like sheet 2, a polyester group film, or when a heat resistance is required, a film made of polyamide, aramid, or polyethylene naphthalate or polyphenylene sulfide or polyamide-imide is employed.

The fluorocarbon fibers 1 may be filled, even in the untreated state, on the film 2, but by subjecting said fibers 1 to a plasma discharge treatment or corona discharge treatment, hydrophilic group is formed on the surface of the fibers 1, and adhering property with respect to the film 2 i.e., the base material may be improved as compared with the untreated fluorocarbon fibers, thus making it possible to suppress the undesirable falling off of the fluorocarbon fibers from the film 2. Although not particularly limited in the present invention, polytetrafluoroethylene should preferably be used for the fluorocarbon fibers 1, but this may be replaced, for example, by a copolymer of tetrafluoroethylene and perfluoroalkylvinylether. It has been found by the investigation of the present invention that the dynamic frictional coefficient of the fluorocarbon fibers 1 subjected to the plasma discharge treatment or corona discharge treatment, with respect to the back coat layer of the magnetic tape is 0.15, which is a value equal to that of the untreated fluorocarbon fibers. Accordingly, when the fibers are used as the pad for the magnetic tape cassette, there is no possibility that the undesirable "tape squeaking" is produced. Conventionally, it has been known to apply a chemical surface modification in order to improve adhesive properties of the fluorocarbon fibers, and in this case, it is true that the adhesive properties with respect to the film 2 is improved, but the dynamic frictional coefficient of the fluorocarbon fibers to the back coat layer of the magnetic tape becomes very large at 0.3, and the "tape squeaking" occurs during recording and reproducing, particularly making it impossible to use the magnetic tape in the case of DCC (Digital audio cassette).

According to the studies made by the present inventor, it has also been found that the effect for preventing the fluorocarbon fibers from falling off may be improved by applying the treatments as described above to the fluorocarbon fibers, and also, by properly selecting adhesive agents to be formed on the film 2 as required for filling the fluorocarbon fibers on said film. The adhesive agents as referred to above may be broadly divided into the aqueous adhesive agent and the organic solvent adhesive agent, in which the organic solvent adhesive agent can provide a higher bonding strength between the fluorocarbon fibers 1 and the film 2, and accordingly, it has also been found that a film made of polyester group resin or polyamide or aramid, polyethylene naphthalate, polyphenylene sulfide, or polyamide-imide is the most preferable.

The pad for the magnetic tape cassette is supported on the tape cassette main body (not shown) by the metallic plate spring 4, and since it is deflected by being depressed by the magnetic head upon insertion of said magnetic head into the tape cassette, the base material for the pad is also required to be provided with a proper elasticity. According to the present invention, the above problem has been solved by providing the elastic member 3 on the side of the film 2 opposite to its side filled with the fluorocarbon fibers 1. In the present invention, for the elastic member 3, expanded materials such as expanded urethane, expanded silicone or the like, animal fibers such as wools, etc., felt materials made of chemical fibers of nylon and polyester or the like, or materials produced by impregnating said chemical fibers with resins such as urethane and the like, may be used. These elastic members as described above have a property to be restored to the original state by the resiliency thereof after the pad has been depressed by the magnetic head.

The lengths of the fluorocarbon fibers 1 to be used for the pad according to the present invention should preferably be in the range of 0.2mm to 1mm. More specifically, when the length of the fluorocarbon fiber is longer than 1mm, buckling strength per one fiber is reduced so that the fiber is bent or folded by the depressing force of the magnetic head, and thus, the function as the pad is undesirably lost. On the contrary, when the length of the fluorocarbon fiber is shorter than 0.2mm, the buckling strength becomes so strong as to damage the back surface of the magnetic tape. Table 1 given below summarizes the relations among the lengths of the fluorocarbon fibers, presence or absence of bending or folding of the fluorocarbon fibers, and presence or absence of flaw on the tape back surface in the pad according to the present invention. To obtain the results in Table 1, experiments were conducted with respect to the fluorocarbon fibers having diameters of about 10µm and about 30µm which may be normally readily available. In the experiments, the pad according to the present invention was attached to the tape cassette article No. RT-D45, manufactured by Matsushita Electric Industrial Co., Ltd., (referred to as the commercially available cassette hereinafter), and this tape cassette was loaded on a tape cassette recorder, article No. RS-DC10, also manufactured by Matsushita Electric Industrial Co., Ltd., (referred to as the commercially available recorder hereinafter), and after subjecting the magnetic tape to reciprocation for one hundred times by the play mode, the states on the pad and the tape back face were observed.

| | Fiber diameter of about 10µm | | Fiber diameter of about 30µm | | |
|---|---|---|---|---|---|
| Fluorocarbon fiber length(mm) | Folding of fibers | Flaw on tape | Folding of fibers | Flaw on tape | Synthetic judgement |
| 0.1 | ○ | x | ○ | x | x |
| 0.2 | ○ | ○ | ○ | ○ | ○ |
| 1.0 | ○ | ○ | ○ | ○ | ○ |
| 1.2 | x | ○ | x | ○ | x |
| 2.0 | x | ○ | x | ○ | x |
| Remarks: ○ ---- No fault X ---- Some fault | | | | | |

As shown in the synthetic judgement of Table 1, in the range of diameters from 10 to 30µm for the practical fluorocarbon fibers, it is clearly seen that the folding of fibers and flaw to the tape are not observed in the range of fluorocarbon fiber length of 0.2 to 1.0mm.

As one embodiment according to the present invention, after fluorocarbon fibers having the fiber length at 0.5mm and fiber diameter of about 30µm were subjected to the plasma discharge treatment and filled on a polyester film, the polyester film was mounted on an expanded urethane sheet by an adhesive agent, and said expanded urethane sheet was further mounted on a metallic plate spring by an adhesive agent, thereby to form a pad for the magnetic tape cassette.

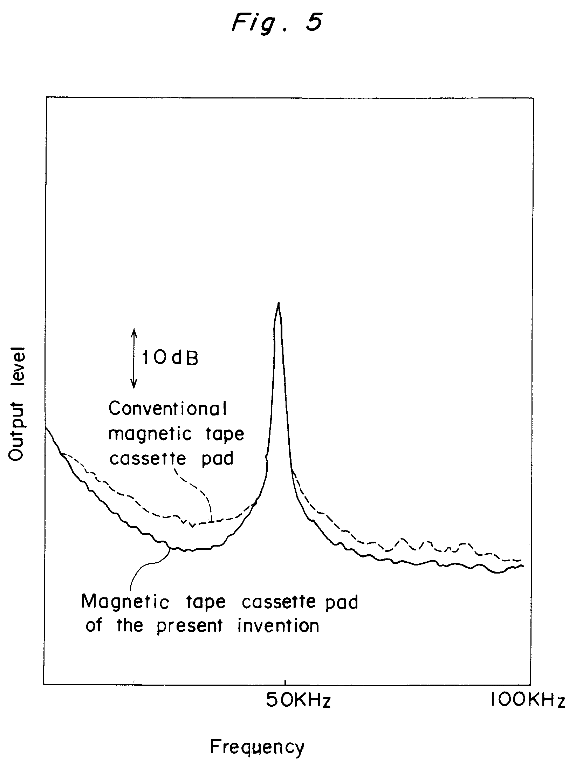

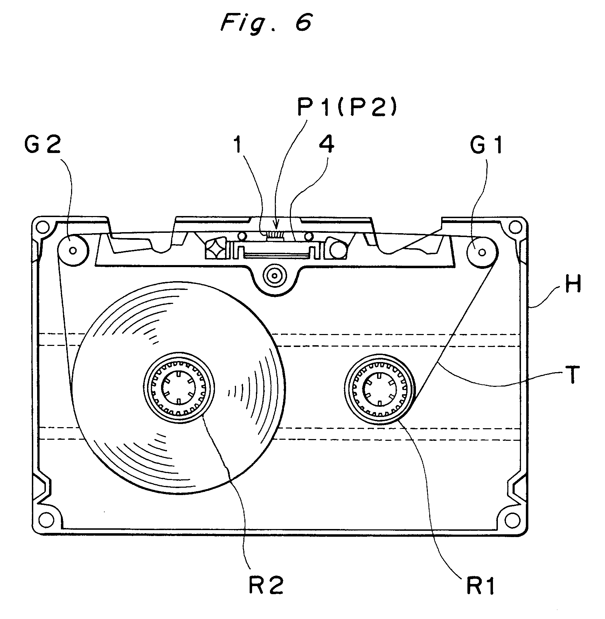

The pad P1 thus prepared was attached to the commercially available tape cassette as shown in Fig. 6, which includes a casing H, and a pair of hubs R1 and R2 around which a magnetic tape T is wound for transporting said tape T through a guide roller G1, the pad P1, and another guide roller G2 as shown. Results of measurements taken for frequency analysis on the recorded and reproduced signals obtained by providing the pad P1 on the tape cassette as described above are shown in Fig. 5, which simultaneously shows the results of measurements taken for frequency analysis on the recorded and reproduced signals by attaching a conventional pad made of a wool-felt material to the commercially available tape cassette as comparative data.

As is seen from Fig. 5, according to the magnetic tape cassette pad of the present invention, no "tape squeaking" is produced, while the noise level of the signal is lower, by about 5dB at the maximum, than that of the conventional pad, thus providing a remarkable effect.

Furthermore, two hundred tape cassettes each provided with the pad according to the present embodiment, and having a magnetic tape length equivalent to 90 minutes were prepared by using the commercially available tape cassettes, and subjected to repeated reciprocation of hundred times in the play mode by employing the commercially available video tape recorder. As a result, falling off of the fluorocarbon fibers from the pad was limited only to one tape cassette, and the number of fibers falling off was very small at one piece.

Moreover, as the comparative data, two hundred tape cassettes each provided with the conventional pad of the fluorocarbon fiber felt, and having a magnetic tape length equivalent to 90 minutes were also prepared by using the commercially available tape cassettes, and subjected to repeated reciprocation of hundred times in the play mode on the commercially available video tape recorder. As a result, falling off of the fluorocarbon fibers from the pad was observed on as many as eighty-five tape cassettes, and the number of fibers falling off was large at seven pieces per one tape cassette on the average.

From the above results, it is seen that the pad according to the present invention has a remarkable effect for preventing falling off of the fluorocarbon fibers.

Referring further to Figs. 3 and 4, there is shown a pad P2 for a magnetic tape cassette P2 according to another embodiment of the present invention, in which the fluorocarbon fibers 1 are filled on a polyester film 5 as the base material. In the embodiment of Figs. 3 and 4, after the fluorocarbon fibers 1 having the fiber length at 0.5mm and fiber diameter of about 30µm were subjected to the plasma discharge treatment and filled on the polyester film 5, said polyester film 5 was mounted on the metallic plate spring 4 by an adhesive agent at the side of the polyester film 5 not filled with the fluorocarbon fibers 1, thereby to form the pad P2 for the magnetic tape cassette.

The pad P2 thus prepared was also attached to the commercially available tape cassette as shown in Fig. 6 for recording and reproducing in the similar manner as in the pad P1 described earlier. Results of measurements taken for frequency analysis on the recorded and reproduced signals obtained by providing the pad P2 on the tape cassette as described above are also shown in Fig. 5, which simultaneously shows the results of measurements taken for frequency analysis on the recorded and reproduced signals by attaching the conventional pad made of a wool felt material to the commercially available tape cassette as comparative data.

As is clear from Fig. 5, according to the magnetic tape cassette pad P2 of the above embodiment also, no "tape squeaking" is produced, while the noise level of the signal is lower, by about 5dB at the maximum, than that of the conventional pad, thus providing a remarkable effect.

Furthermore, two hundred tape cassettes each provided with the pad according to the present embodiment, and having a magnetic tape length equivalent to 90 minutes were prepared by using the commercially available tape cassettes, and subjected to repeated reciprocation of hundred times in the play mode by employing the commercially available video tape recorder. As a result, falling off of the fluorocarbon fibers from the pad was also limited only to one tape cassette, and the number of fibers falling off was very small at one piece.

Moreover, as the comparative data, two hundred tape cassettes each provided with the conventional pad of the fluorocarbon fiber felt, and having a magnetic tape length equivalent to 90 minutes were also prepared by using the commercially available tape cassettes, and subjected to repeated reciprocation of hundred times in the play mode on the commercially available video tape recorder. As a result, falling off of the fluorocarbon fibers from the pad was observed on as many as eighty-five tape cassettes, and the number of fibers falling off was large at seven pieces per one tape cassette.

From the above results, the remarkable effect for preventing the fluorocarbon fibers from falling off according to the present invention can be ensured.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

## Claims

1. A pad for use in a magnetic tape cassette, which comprises a base material (2), a large number of fluorocarbon fibers (1) filled on said base material, and a metallic plate spring (4) on which said base material is fixed at its side not filled with the fluorocarbon fibers.

2. A pad as claimed in Claim 1, wherein said fluorocarbon fibers (1) are treated for easy adhesion.

3. A pad as claimed in Claim 1, wherein said fluorocarbon fibers (1) are subjected to plasma discharge treatment or corona discharge treatment.

4. A pad as claimed in Claim 1, wherein lengths of said fluorocarbon fibers (1) are in the range from 0.2mm to 1.0mm.

5. A pad as claimed in Claim 1, wherein a density for filling the fluorocarbon fibers (1) with respect to the base material (2) is in the range from 80 fibers/mm₂ to 500 fibers/mm₂.

6. A pad as claimed in Claim 1, wherein the base material (2) is in the form of a film-like sheet.

7. A pad as claimed in Claim 1, wherein the base material (2) is of a synthetic rubber.

8. A pad as claimed in Claim 1, wherein the base material (2) is of expanded urethane.

9. A pad as claimed in Claim 1, wherein the base material (2) is of a double-layer structure of a film-like sheet (2) and an elastic member (3), and the fluorocarbon fibers (1) are filled on said film-like sheet.

10. A pad as claimed in Claim 9, wherein said film-like sheet (2) is of a polyester group film.

11. A pad as claimed in Claim 9, wherein the fluorocarbon fibers (1) are of polytetrafluoroethylene.

12. A pad as claimed in Claim 9, wherein the fluorocarbon fibers (1) are of a copolymer of tetrafluoroethylene and perfluoroalkylvinylether.

13. A pad as claimed in Claim 9, wherein the elastic member (3) is of a synthetic rubber.

14. A pad as claimed in Claim 9, wherein the elastic member (3) is of expanded urethane.

15. A pad for use in a magnetic tape cassette, which comprises a film-like sheet (2), fluorocarbon fibers (1) having lengths in the range from 0.2mm to 1mm, and treated for easy adhesion, and filled on said film-like sheet (2), an elastic member (3) attached to the side of said film-like sheet (2) opposite to its side filled with the fluorocarbon fibers (1), and a metallic plate spring (4) attached to the side of said elastic member (3) opposite to its side attached to said film-like sheet (2).

16. A magnetic tape cassette provided with a pad (P1, P2), which comprises a base material (2, 3, 5), a large number of fluorocarbon fibers (1) filled on said base material, and a metallic plate spring (4) on which said base material (2, 3, 5) is fixed at its side not filled with said fluorocarbon fibers.
